(19) Europäisches Patentamt
European Patent Office
Office européen des brevets

(11) Veröffentlichungsnummer: **0 309 810 A2**

(12) **EUROPÄISCHE PATENTANMELDUNG**

(21) Anmeldenummer: 88114991.8

(22) Anmeldetag: 14.09.88

(51) Int. Cl.4: **C10M 173/02 , C08L 71/02 , C08G 65/28**

(30) Priorität: 26.09.87 DE 3732499
02.09.88 DE 3829840

(43) Veröffentlichungstag der Anmeldung:
05.04.89 Patentblatt 89/14

(84) Benannte Vertragsstaaten:
AT BE CH DE ES FR GB GR IT LI LU NL SE

(71) Anmelder: Akzo N.V.
Postbus 9300 Velperweg 76
NL-6800 SB Arnhem(NL)

(72) Erfinder: Philippsen, Elke, Dr.
Friedenau 12
D-5166 Kreuzau(DE)

(74) Vertreter: Pfeiffer, Ernst et al
Akzo NV Akzo Patents Department P.O. Box 9300
NL-6800 SB Arnhem(NL)

# (54) Verdickungsmittel.

(57) Es werden Verdickungsmittel beschrieben, die Polyätherderivate und niedermolekulare Alkylenglykolalkyläther, gegebenenfalls weitere übliche Zusatzmittel und Rest zu 100 % Wasser enthalten. Mono-, Di- oder Trialkylenglykolalkyläther werden bevorzugt.

Es ist möglich, Stammlösungen mit Verdickergehalten von 50 % und mehr herzustellen. Die Verdickungsmittel lassen sich auf Grund ihrer überraschend niedrigen Viskosität sehr gut handhaben und weisen beim Verdicken, insbesondere von wäßrigen Systemen synergistische Effekte auf.

EP 0 309 810 A2

## Verdickungsmittel

Die Erfindung betrifft Verdickungsmittel auf der Basis von Polyätherderivaten.

Verdickungsmittel werden für die Verdickung von verschiedensten Flüssigkeiten eingesetzt. Als Beispiele seien hier nur genannt natürliche und synthetische Öle, Wasser, wäßrige Elektrolytlösungen und wäßrige Lösungen organischer Substanzen.

Ein wichtiges Anwendungsgebiet von Verdickungsmitteln ist die Herstellung von funktionalen Flüssigkeiten wie z.B. hydraulischen Flüssigkeiten und Metallbearbeitungsflüssigkeiten, an die hohe Anforderungen bezüglich Viskosität, Scherstabilität und Temperaturverhalten gestellt werden.

Verdickungsmittel auf der Basis von Polyätherderivaten sind bereits bekannt. So werden in der DE-OS 33 02 465, auf deren Offenbarung sich hier ausdrücklich bezogen wird, Verdickungsmittel auf der Basis von Polyätherderivaten beschrieben, die hergestellt werden, indem man an einen Alkohol mit mindestens 10 Kohlenstoffatomen Alkylenoxid, namlich Äthylenoxid und/oder Propylenoxid anlagert und sodann an den dabei erhaltenen Polyalkylenglykolmonoäther ein langkettiges 1,2-Epoxid mit einer Kettenlänge von 10 bis 32 C-Atomen anlagert.

In der DE-OS 3 630 319 werden weitere, ebenfalls auf der Basis von Polyäthern hergestellte Verdickungsmittel beschrieben. Bei dem dort angegebenen Verfahren alkoxyliert man einwertige Alkohole mit 8-30 Kohlenstoffatomen mit einem Gemisch Äthylenoxid/propylenoxid um, wobei das molare Verhältnis Äthylenoxid zu Propylenoxid im Gemisch etwa 30 : 70 bis 90 : 10 beträgt und pro Mol Alkohol 20 bis 200 Mol Alkylenoxide eingesetzt werden, und setzt den erhaltenen Polyäther in einem molaren Verhältnis von 1 : 0,7 bis 1 : 0,25 mit einem Diisocyanat um. Auf die Offenbarung in dieser DE-OS wird sich hier ausdrücklich bezogen.

Mit derartigen Verdickungsmitteln ist es möglich, die Viskosität von zahlreichen Flüssigkeiten beachtlich zu erhöhen. Dabei kann man das Polyätherderivat in der zu verdickenden Flüssigkeit direkt lösen; man kann aber auch sogenannte Stammlösungen herstellen und diese dann zum Verdicken einsetzen.

Von Nachteil bei diesen Verfahren ist, daß bei Einsatz solcher Verdickungsmittel, insbesondere wenn sie in fester Form vorliegen, lange Zeit gerührt werden muß, um den Verdicker zur Wirkung zu bringen. In einer ganzen Reihe von Fällen kann es zu Problemen kommen, wenn der Verdicker in den zu verdickenden Flüssigkeiten nur unter Schwierigkeiten gelöst werden kann, z.B. wenn beim Lösevorgang die Temperatur erhöht werden muß oder wenn besondere Rührvorrichtungen notwendig sind.

Diese Schwierigkeiten können zum Teil durch Verwendung sogenannter Stammlösungen umgangen werden, indem man eine möglichst hochkonzentrierte Lösung des Verdickungsmittels herstellt und diese Stammlösung zum Verdicken der Flüssigkeit einsetzt.

Von Nachteil beim Arbeiten mit diesen Stammlösungen ist, daß es vielfach nicht möglich ist, Stammlösungen mit hohen Konzentrationen herzustellen, da die Viskosität der Stammlösungen mit zunehmender Konzentration steil ansteigt, so daß derartige Stammlösungen schwierig zu handhaben sind.

In der US-PS 4 491 526 werden Verdickungsmittel beschrieben, die verschiedene Polyätherderivate enthalten können und außerdem wenigstens einen oberflächenaktiven äthoxylierten Polyäther enthalten müssen. Daneben wird empfohlen, diesen Verdickungsmitteln eine ganze Reihe von anderen Zusatzmitteln u.a. äthoxylierte Phosphorsäureester zuzusetzen.

Durch den Zusatz der oberflächenaktiven äthoxylierten Polyäther neigen diese Verdickungsmittel zum Schäumen. Darüber hinaus sind sie insbesondere bei höheren Konzentrationen des Polyätherderivats und des oberflächenaktiven Mittels hochviskos. Im übrigen muß, um größere Mengen des Polyätherderivats in Wasser lösen zu können, eine beachtliche Menge an oberflächenaktiver Substanz zugesetzt werden.

Obwohl bereits eine ganze Reihe von Verdickungsmitteln auf Polyätherbasis bekannt sind, besteht noch ein Bedürfnis nach verbesserten Verdickungsmitteln, insbesondere nach solchen, welche die o.g. Nachteile nicht oder nur in verringertem Maße aufweisen.

Aufgabe der Erfindung ist es deshalb, ein Verdickungsmittel zur Verfügung zu stellen, das als Stammlösung gut handhabbar ist, das hohe Konzentrationen des Polyätherderivats in der Stammlösung ermöglicht und das auf einfache Weise in der zu verdickenden Flüssigkeit verteilt werden kann.

Diese Aufgabe wird gelöst durch ein Verdickungsmittel auf Basis von Polyätherderivaten und Wasser, das gekennzeichnet ist durch ein Polyätherderivat mit einem mittleren Molekulargewicht von ca. 900 bis ca. 75 000, einem niedermolekularen Alkylenglykolalkyläther, gegebenenfalls weiteren üblichen Zusatzmitteln und Rest zu 100 % Wasser. Das Verdickungsmittel enthält vorzugsweise Polyätherderivate mit einem mittleren Molekulargewicht von 900 bis 12 000. Alkylenglykolalkyläther mit Molekulargewichten bis höchstens 500, insbesondere bis höchstens 300, vorzugsweise bis höchstens 200 sind besonders geeignet.

Ein besonders vorteilhaftes Verdickungsmittel enthält 30 bis 60 Gew.-% des Polyätherderivats und 30

bis 15 Gew.-% des Alkylenglykolalkyläther.

Niedermolekulare Mono-, Di- oder Trialkylenglykolalkyläther werden bevorzugt.

Besonders günstig sind niedermolekulare Alkylenglykolmonoalkyläther, insbesondere Butyläther.

In einer besonders vorteilhaften Ausführungsform der Erfindung enthält das Verdickungsmittel ein Polyätherderivat der Formel

$$R_1O(CH_2CH_2O)_n(CH_2\overset{CH_3}{\overset{|}{C}}H{-}O)_m(CH_2\overset{R_2}{\overset{|}{C}}H{-}O)_pH$$

wobei $R_1$ ein gegebenenfalls substituierter Kohlenwasserstoffrest mit mindestens 10 C-Atomen, n 10 bis 100, m = 0 bis 25 und p = 1 bis 3, sowie $R_2$ ein Alkylrest mit 8 bis 30 C-Atomen ist, wobei n, m und p Mittelwerte sind. Vorzugsweise weisen diese Polyätherderivate Molekulargewichte von 900 bis 10 000, insbesondere von 2 000 bis 9 000 auf. Sehr geeignet sind Polyätherderivate, bei denen n 40 bis 80, $R_1$ Kohlenwasserstoffreste mit 10 bis 22 Kohlenstoffatomen, $R_2$ Alkylreste mit 8 bis 30 Kohlenstoffatomen und p 1 bis 3 bedeutet und m = 0; vorzugsweise bedeutet n = 50 - 70, p = 1 und m = 0.

In einer weiteren besonders vorteilhaften Ausführungsform der Erfindung enthält das Verdickungsmittel ein Polyätherderivat, das erhalten worden ist, indem man einwertige Alkohole mit 8 bis 30 Kohlenstoffatomen mit einem Gemisch Äthylenoxid/propylenoxid, wobei das molare Verhältnis Äthylenoxid : Propylenoxyd im Gemisch etwa 30 : 70 bis 90 : 10 beträgt und pro Alkohol 20 bis 200 Mol Alkylenoxide eingesetzt werden, alkoxyliert und den erhaltenen Polyäther in einem molaren Verhältnis von 1 : 0,7 bis 1 : 0,25 mit einem Diisocyanat umsetzt.

Vorzugsweise werden Polyätherderivate dieser Art eingesetzt, die dadurch erhalten worden sind, daß man einwertige Alkohole mit 8 bis 30 Kohlenstoffatomen mit einem Gemisch Äthylenoxid/propylenoxid, wobei das molare Verhältnis Äthylenoxid zu Propylenoxid im Gemisch etwa 50 : 50 bis 90 : 10 beträgt und pro Mol Alkohol 60 bis 120 Mol Alkylenoxid eingesetzt werden, alkoxyliert und den erhaltenen Polyäther in einem molaren Verhältnis von 1 : 0,5 bis 1 : 0,25 mit einem Diisocyanat umsetzt.

In einer weiteren vorteilhaften Ausführungsform der Erfindung enthält das Verdickungsmittel einen Polyätherderivat, das erhalten worden ist, indem man aliphatische Alkohole mit 8 bis 22 Kohlenstoffatomen mit einem Gemisch von Äthylenoxid/propylenoxid, das mehr als 20 Gew-% Propylenoxid enthält, in einem molaren Verhältnis Alkohol zu Gemisch Alkylenoxid von 1 : 40 bis 1 : 150 umsetzt und sodann den erhaltenen Polyäther mit statischer Verteilung des Äthylen- und Propylenoxids mit 5 bis 20 Mol Äthylenoxid umsetzt und das erhaltene, mit einem Block aus Äthylenoxid versehene Alkoxylierungsprodukt mit einem Diepoxid verknüpft, wobei bei der Verknüpfungsreaktion pro Mol Diepoxid 0,5 bis 3 Mol Alkoxylierungsprodukt eingesetzt werden. Als Diepoxide sind hierbei besonders Vinylcyclohexendioxid und 1.2.7.8-Diepoxyoctan geeignet. Polyäther dieser Art werden in der am gleichen Tag hinterlegten Patentanmeldung (internes Aktenzeichen: AHD2233) näher beschrieben, worauf hier besonders Bezug genommen wird.

Die Alkylenglykolalkyläther können gemäß der Erfindung als Gemische von verschiedenen Alkylenglykolalkyläther zum Einsatz gelangen; es ist ebenfalls möglich, Gemische von Polyätherderivaten einzusetzen.

Die Verdickungsmittel gemäß der Erfindung lassen besonders günstig zum Verdicken von wäßrigen Systemen, insbesondere von hydraulischen Flüssigkeiten und von wäßrigen Systemen zur Metallbearbeitung einsetzen.

Unter Polyätherderivaten, wie sie im Rahmen der Erfindung zum Einsatz gelangen, sind Polyätherderivate mit einem Molekurgewicht von mindestens 900 zu verstehen. Es sind bereits eine Reihe derartiger Polyätherderivate bekannt; sie können z.B. erhalten werden durch Anlagerung eines oder mehrerer Alkylenoxide wie Äthylenoxid oder Propylenoxid an eine Verbindung, die ein oder mehrere Wasserstoffatome besitzt wie z.B. ein- oder mehrwertige Alkohole usw. Bei den einwertigen Alkoholen sind ins besondere solche mit mindestens 10 Kohlenstoffatomen geeignet.

Diese Polyäther können sodann mit weiteren Verbindungen umgesetzt werden, wobei ein gewisser Hydrophobierungseffekt erzielt wird. Zur Anlagerung an die Polyäther sind insbesondere langkettige 1,2-Epoxide mit einer Kettenlänge von 10 bis 32 Kohlenstoffatomen geeignet.

Derartige Polyätherderivate werden z.B. in der DE-OS 3 302 465 beschrieben.

In einer besonders vorteilhaften Ausführungsform der Erfindung werden Polyätherderivate eingesetzt, die durch Anlagerung von Alkylenoxiden wie Äthylenoxid und/oder Propylenoxid an derartige Alkohole und anschließende stufenweise Anlagerung eines langkettigen 1,2-Epoxids erhalten worden sind. Derartige Polyätherderivate werden in der vorstehend angegebenen DE-OS 3 302 465 beschrieben. Derartige

Polyätherderivate werden durch die vorstehend angegebene Formel beschrieben. Polyätherderivate, bei denen m den Wert 0 einnimmt, d.h. Polyätherderivate, die nur durch Anlagerung von Äthylenoxid erhalten worden sind und bei denen p = 1 ist, sind besonders geeignet.

Unter niedermolekularem Alkylenglykolalkyläther im Rahmen der Erfindung sind Mono- und Dialkyläther von niedermolekularen Glykolen wie Äthylenglykol, Propylenglykol, Diäthylenglykol, Dipropylenglykol, Triäthylenglykol usw. zu verstehen. Niedermolekular bedeutet, daß es sich nicht um polymere Verbindungen mit Molekulargewichten über 500 handelt, daß vielmehr das Molekulargewicht höchstens 500, vorzugsweise höchstens 300, insbesondere höchstens 200 beträgt. Besonders geeignet sind niedermolekulare Alkylenglykoläther, welche nur 1 bis 3 Alkylengruppen besitzen und deren Alkylgruppen1 bis 4 Kohlenstoffatome aufweisen.

Als Beispiele für niedermolekulare Alkylenglykolalkyläther, welche sich im Rahmen der Erfindung als geeignet erwiesen haben, seien erwähnt: Äthylenglykoläthyläther, Äthylenglykol-n-butyläther, Diäthylenglykoläthyläther, Diäthylenglykol-n-butyläther, Triäthylenglykoldimethyläther, Propylenglykolmethyläther, Propylenglykoläthyläther, Propylenglykol-n-butyläther, Propylenglykol-t-butyläther, Dipropylenglykolmethyläther und Dipropylenglykol-n-butyläther.

Zur Herstellung eines Verdickungsmittels gemäß der Erfindung kann auf folgende Weise vorgegangen werden.

Das Polyätherderivat sowie der niedermolekulare Alkylenglykolalkyläther und Wasser werden in den gewünschten Konzentrationen miteinander vermengt und durch Rühren homogenisiert. Dies geschieht vorzugseise bei Raumtemperatur.

Die Mengenverhältnisse der einzelnen Komponenten können innerhalb des Gemisches in weiten Grenzen variiert werden. So lassen sich Verdickungsmittel herstellen, die bis 5 % und weniger des Polyäthers enthalten oder bis zu 75 % und mehr des Polyäthers. Der Alkylenglykolalkyläther kann z.B. in Mengen von etwa 2,5 bis 30 Gew.% im Verdickungsmittel vorhanden sein. Höhere oder niedrigere Mengen sind je nach Verwendungszweck möglich.

Auch der Anteil an Wasser kann je nach Einsatzzweck innerhalb eines großen Bereichs variiert werden. So ist es möglich, Verdickungsmittel mit einem Wassergehalt von 10 % und weniger und bis zu etwa 90 % und mehr abzumischen.

Besonders vorteilhaft ist es, etwa 30 bis 60 Gew.-% des Polyäthers und 30 bis 15 Gew.-% des Alkylenglykolalkyläthers und die entsprechende Menge, die bis zu 100 % fehlt, an Wasser miteinander zu vermengen.

Das Vermischen der Komponenten geschieht bevorzugt bei Zimmertemperatur und führt zu stabilen Verdickungsmitteln, die lange gelagert werden können.

Das Beimischen von Zusatzmitteln wie z.B. Dispergatoren und sonstigen Mitteln ist beim Vermischen nicht notwendig; da die Stabilität der Verdickungsmittel hervorragend ist. Selbstverständlich können dem Verdickungsmittel übliche Zusätze beigemischt werden. Derartige Zusatzmittel sind bekannt und hängen von dem jeweiligen Einsatzgebiet des Verdickungsmittels ab.

So können nach Bedarf Korrosionsinhibitoren, Farbstoffe oder Schmiermittel u.dgl. zugesetzt werden. Auch können Tenside mitverarbeitet werden, z.B. wenn die Verdickungsmittel zum Verdicken von nichtwäßrigen Systemen eingesetzt werden sollen.

Gemäß der Erfindung lassen sich Polyätherderivate, niedermolekulare Alkylenglykolätherderivate und Wasser vorteilhaft zu einem homogenen Verdickungsmittel, insbesondere in Form von hochkonzentrierten Stammlösungen vermischen; man kann sehr hohe Konzentrationen bezüglich der eigentlichen verdickenden Substanz, namlich des Polyätherderivats erzielen.

Besonders überraschend war ferner, daß die hochkonzentrierten Verdickungsmittel eine wesentlich niedrigere Viskosität besitzen als Verdickungsmittel, die zwar Wasser enthalten, aber nicht den niedermolekularen Alkylenglykolalkyläther. So weist z.B. eine 15%ige wäßrige Lösung eines Polyätherderivats, wie sie in der DE-OS 33 02 465 beschrieben werden, Viskositäten von 6 000 bis 8 000 cSt auf, wogegen eine Verdickerlösung gemäß der Erfindung, welche das gleiche Ätherderivat jedoch in 50%iger Konzentration enthält, nur eine Viskosität von ca. 200 cSt besitzt.

Auf Grund der günstigen Viskositäten lassen sich Verdickungsmittel gemäß der Erfindung hervorragend handhaben, insbesondere bei Raumtemperatur verarbeiten, abwiegen; auch bietet der Transport z.B. durch Pumpen keinerlei Schwierigkeiten.

Die Verdickungsmittel gemäß der Erfindung liegen im allgemeinen auch bei hohen Konzentrationen des Polyätherderivats bei Raumtemperatur als klare Lösungen vor, die so dünnflüssig sind, daß sich daraus eine hervorragende Handhabbarkeit ergibt.

Es war besonders überraschend, daß beim Einsatz der Verdickungsmittel gemäß der Erfindung in speziellen Anwendungen sich synergistische Effekte erzielen lassen. Diese Effekte bestehen darin, daß sich

auf Grund von intermolekularen Wechselwirkungen zwischen den Polyäthern und dem Alkylenglykolalkyläthern, evtl. unter Beteiligung spezieller sonstiger Komponenten der betreffenden anwendungstechnischen Formulierung bei gegebener Verdickerkonzentration höhere Viskositäten erzielen lassen als beim Einsatz von Verdickern, die keinen Alkylenglykolalkyläther enthalten. Es lassen sich also hochkonzentrierte Stammlösungen mit niedrigen Viskositäten einstellen, die ihrerseits, z.B. mit Wasser zu einer hydraulischen Flüssigkeit verdünnt, eine höhere Viskosität aufweisen, als es ohne die erfindungsgemäße Mitverwendung des Alkylenglykolalkylethers möglich ist.

Dieser Effekt wirkt sich besonders vorteilhaft bei der Herstellung von hydraulischen Flüssigkeiten mit hohem Wassergehalt aus. Dazu zählen Flüssigkeiten wie HWBT-Typen (high water based fluids), die als hydraulische Flüssigkeiten dienen und vorwiegend als Substitutionsprodukte für Hydraulikflüssigkeiten auf Basis von Mineralölen, Wasser/Glykolgemischen u.a.m. verwendet werden.

Die Verdickungsmittel gemäß der Erfindung besitzen eine hohe Scherstabilität und zwar sowohl als Stammlösung als auch nach entsprechender Verdünnung in Wasser.

Ihre Einsatzgebiete sind jedoch nicht nur wäßrige Systeme, sie lassen sich auch in sonstigen Einsatzgebieten verwenden, wo Verdickungsmittel, insbesondere als niedrigviskose Stammlösungen auf Polyätherbasis erwünscht sind.

Die Erfindung wird durch folgende Beispiele näher erläutert:

Beispiel 1

Polyätherderivat entsprechend der vorstehend angeführten allgemeinen Formel, hergestellt nach der Lehre der DE OS 33 02 465, wobei n = 60, m = 0, b = 1, $R_1$ = 10, $C_{16/17}H_{33/37}$, $R_2$ = $C_{12}H_{25}$ wird mit Wasser und Äthylenglykolbutyläther in Mengen vermischt, daß man eine Lösung aus 50 % Polyätherderivat, 25 % Wasser und 25 % Äthylenglykolbutyläther erhält. Diese Lösung weist bei Zimmertemperatur eine Viskosität von 195 cSt auf.

Beispiel 2 - 8

In gleicher Weise wie in Beispiel 1 beschrieben werden aus 50 % des Polyätherderivats, 25 % Wasser und 25 % Alkylenglykolalkyläther unter Vermengen bei Zimmertemperatur eine Lösung hergestellt. Die Eigenschaften der erhaltenen Lösungen sind in Tabelle 1 wiedergegeben.

Tabelle 1

| Beispiel-Nr. | Alkylenglykolalkyläther | Viskosität in cST bei Raumtemperatur |
|---|---|---|
| 2 | Diäthylenglykolbutyläther | 310 |
| 3 | Propylenglykolmethyläther | 633 |
| 4 | Propylenglykoläthyläther | 308 |
| 5 | Propylenglykolbutyläther | 207 |
| 6 | Propylenglykol-t-butyläther | 266 |
| 7 | Dipropylenglykolmethyläther | 626 |
| 8 | Dipropylenglykolbutyläther | 361 |

Die folgenden Beispiele zeigen, zu welchen wäßrigen Flüssigkeiten man gelangt, wenn man aus Stammlösungen, wie sie vorstehend beschrieben sind und die 50 % des Polyätherderivats enthalten, mit Wasser zu einer Lösung verdünnt, welche noch 7,5 % des Polyätherderivats enthält.

Beispiele 9 - 16

Durch Verdünnen von 50%igen Stammlösungen mit Wasser werden Lösungen eingestellt, die noch 7,5 % des Polyätherderivats enthalten.

Die Eigenschaften der erhaltenen Lösungen werden in Tabelle 2 zusammengefaßt.

Tabelle 2

| Beispiel Nr. | Alkylenglykolalkyläther | Viskosität in cST bei einer Temperatur T = 38° C |
|---|---|---|
| 9 | Äthylenglykoläthyläther | 35 |
| 10 | Äthylenglykol-n-butyläther | 60 |
| 11 | Diäthylenglykolbutyläther | 47 |
| 12 | Triäthylenglykoldimethyläther | 40 |
| 13 | Propylenglykol-n-butyläther | 87 |
| 14 | Propylenglykol-t-butyläther | 47 |
| 15 | Dipropylenglykol-n-butyläther | 113 |
| 16 (Vergleichsbeispiel) | ohne Zusatz eines Alkylenglykolalkyläthers | 34 |

Alle in Tabelle 2 angegebenen Lösungen enthalten 7,5 % des Polyätherderivats. Die Versuche zeigen, däß mit der gleichen Menge des eingesetzten Polyätherderivats gemäß der Erfindung höhere Viskositäten bei 38° C erhalten werden.

Die folgenden Beispiele zeigen, welche Mengen an Polyätherderivat gemäß der Erfindung notwendig sind, um eine wäßrige hydraulische Flüssigkeit mit einer Viskosität von 32 cSt bei 38° C zu erhalten.

Tabelle 3

| Beispiel Nr. | Alkylenglykolalkyläther | Prozent Polyätherderivat |
|---|---|---|
| 17 | Äthylenglykol-n-butyläther | 6,7 % |
| 18 | Propylenglykol-n-butyläther | 6,2 % |
| 19 | Propylenglykol-t-butyläther | 7,0 % |
| 20 | Diäthylenglykol-n-butyläther | 7,1 % |
| 21 | Dipropylenglykol-n-butyläther | 6,0 % |

Um mit dem gleichen Polyätherderivat ohne den Zusatz von Alkylenglykolalkyläther die Viskosität von 32 cSt bei 38° C einzustellen, ist der Zusatz von 7,5 % Polyätherderivat erforderlich.

Bei den im Text erwähnten Molekulargewichten der Polyäther handelt es sich um Gewichtsmittel.

Beispiel 22

Herstellvorschrift eines Polyätherderivats nach Anspruch 16.

260 g Talgalkohol werden in flüssigem Zustand im Autoklaven mit 0.8 g KOH-Pulver versetzt und 60 Minuten bei 120° C und 10-15 Torr entwässert. Anschließend wird das Vakuum mit Stickstoff aufgehoben bis zu einem Druck von 0.4 bar. Dann werden 2910 g Ethylenoxid und 813 g Propylenoxid im Gemisch bei 150 - 160° C und 5 bar portionsweise zudosiert. Nachdem die Reaktion beendet ist, werden erneut 440 g Ethylenoxid bei 150 - 160° C und 5 bar zugegeben. Nach beendeter Zudosierung und Nachreaktion wird das Produkt abgekühlt. Anschließend werden 1000 g des flüssigen Alkoxilates in einen trockenen, mit Stickstoff gespülten Dreihalskolben mit Rührer, Rückflußkühler, Kontaktthermometer, Tropftrichter, Vakuum- und Stickstoff-Anschluß gefühlt und mit 4 g KOH-Pulver versetzt. Dann wird 1/2 Stunde bei 120° C und 10-15 Torr entwässert. Danach wird das Vakuum mit Stickstoff aufgehoben, und 26.2 g Vinylcyclohexendioxid bei 120° C in 30 Min. zugetropft. Nach 90 Min. Nachreaktion bei 120° C wird das Produkt abgekühlt und abgefüllt.

Beispiel 23-25

In gleicher Weise wie in Beispiel 1 beschrieben wird aus 50 % des Polyätherderivates des Beispiels 22,

25 % Wasser und 25 % Alkylenglykolalkyläther unter Vermengen bei Raumtemperatur eine Lösung hergestellt. Durch Verdünnen der 50 %-igen Stammlösung in Wasser werden Lösungen hergestellt, die noch 5 % des Polyäthers enthalten. Die Eigenschaften der erhaltenen Lösungen sind in Tabelle 4 zusammengefaßt.

Tabelle 4

| Beispiel Nr. | Alkylenglykolalkyläther | Viskosität in cSt alkyläther bei einer Temperatur von 38° C |
|---|---|---|
| 23 (Vergleichsbeispiel) | ohne Zusatz eines Alkylenglykolalkyläther | 18,2 |
| 24 | Äthylenglykol-mono-n-butyläther | 26,4 |
| 25 | Dipropylenglykol-n-butyläther | 47,1 |

**Ansprüche**

1. Verdickungsmittel auf Basis von Polyätherderivaten und Wasser, gekennzeichnet durch ein Polyätherderivat mit einem mittleren Molekulargewicht von ca. 900 bis ca. 75 000, einem niedermolekularen Alkylenglykolalkyläther, gegebenenfalls weiteren üblichen Zusatzmitteln und Rest zu 100 % Wasser.

2. Verdickungsmittel nach Anspruch 1, gekennzeichnet durch ein Polyätherderivat mit einem mittleren Molekulargewicht von ca. 900 bis 12 000.

3. Verdickungsmittel nach einem der Ansprüche 1 bis 2, gekennzeichnet durch einen niedermolekularen Alkylenglykolalkyläther mit einem Molekulargewicht von höchstens 500.

4. Verdickungsmittel nach Anspruch 3, gekennzeichnet durch einen niedermolekularen Alkylenglykolalkyläther mit einem Molekulargewicht von höchstens 300.

5. Verdickungsmittel nach Anspruch 4, gekennzeichnet durch einen niedermolekularen Alkylenglykolalkyläther mit einem Molekulargewicht von höchstens 200.

6. Verdickungsmittel nach einem der Ansprüche 1 bis 5, gekennzeichnet durch 30 bis 60 Gew.-% Polyätherderivat und 30 bis 15 Gew.-% Alkylenglykolalkyläther.

7. Verdickungsmittel nach einem der Ansprüche 1 bis 6, dadurch gekennzeichnet, daß die niedermolekularen Alkylenglykolalkyläther Mono-, Di- oder Trialkylenglykolalkyläther sind.

8. Verdickungsmittel nach einem der Ansprüche 1 bis 7, dadurch gekennzeichnet, daß die niedermolekularen Alkylenglykolalkyläther Alkylenglykolmonoalkyläther sind.

9. Verdickungsmittel nach einem der Ansprüche 1-8, dadurch gekennzeichnet, daß die niedermolekularen Alkylenglykolmonoalkyläther Butyläther sind.

10. Verdickungsmittel nach einem der Ansprüche 1 bis 9, gekennzeichnet durch ein Polyätherderivat der Formel

$$R_1O(CH_2CH_2O)_n(CH_2\overset{CH_3}{\overset{|}{C}}H\text{-}O)_m(CH_2\overset{R_2}{\overset{|}{C}}H\text{-}O)_pH$$

wobei $R_1$ ein gegebenenfalls substituierter Kohlenwasserstoff mit mindestens 10 C-Atomen, n 10 bis 1 000, m = 0 bis 25 und p = 1 bis 3, sowie $R_2$ ein Alkylrest mit 8 bis 30 C-Atomen ist, wobei n, m und p Mittelwerte sind.

11. Verdickungsmittel nach Anspruch 10, dadurch gekennzeichnet, daß das Polyätherderivat ein Molekulargewicht von 900 bis 7 000 hat.

12. Verdickungsmittel nach Anspruch 11, dadurch gekennzeichnet, daß das Polyätherderivat ein Molekulargewicht von 2 000 bis 4 000 hat.

13. Verdickungsmittel nach einem der Ansprüche 10 bis 12, dadurch gekennzeichnet, daß n 40 bis 80, $R_1$ Kohlenwasserstoffreste mit 10 bis 22 Kohlenstoffatomen, $R_2$ Alkylrest mit 8 bis 30 C-Atomen und p = 1 bis 3 und m = 0 bedeutet.

14. Verdickungsmittel nach einem der Ansprüche 1 bis 9, dadurch gekennzeichnet, daß der Polyäther ein Polyätherderivat ist, das erhalten worden ist, indem man einwertige Alkohole mit 8 bis 30 Kohlenstoffatomen mit einem Gemisch Äthylenoxid/propylenoxid, wobei das molare Verhältnis Äthylenoxid : Propylenoxid im Gemisch etwa 30 : 70 bis 90 : 10 beträgt und pro Alkohol 20 bis 200 Mol Alkylenoxide eingesetzt werden, alkoxyliert und den erhaltenen Polyäther in einem molaren Verhältnis von 1 : 0,7 bis 1 : 0,25 mit einem Diisocyanat umsetzt.

15. Verdickungsmittel nach Anspruch 14, dadurch gekennzeichnet, daß der Polyäther ein Polyätherderivat ist, das erhalten worden ist, indem man einwertige Alkohole mit 8 bis 30 Kohlenstoffatomen mit einem Gemisch Äthylenoxid/Propylenoxid, wobei das molare Verhältnis Äthylenoxid zu Propylenoxid im Gemisch etwa 50 : 50 bis 90 : 10 beträgt und pro Mol Alkohol 60 bis 120 Mol Alkylenoxid eingesetzt werden, alkoxyliert und den erhaltenen Polyäther in einem molaren Verhältnis von 1 : 0,5 bis 1 : 0,25 mit einem Diisocyanat umsetzt.

16. Verdickungsmittel nach einem der Ansprüche 1 bis 9, dadurch gekennzeichnet, daß das Verdikkungsmittel ein Polyätherderivat enthält, das erhalten worden ist, indem man aliphatische Alkohole mit 8 bis 22 Kohlenstoffatomen mit einem Gemisch von Äthylenoxid/Propylenoxid, das mehr als 20 Gew-% Propylenoxid enthält, in einem molaren Verhältnis Alkohol zu Gemisch Alkylenoxid von 1 : 40 zu 1 : 150 umsetzt und sodann den erhaltenen Polyäther mit statischer Verteilung des Äthylen- und Propylenoxids mit 5 bis 20 Mol Äthylenoxid umsetzt und das erhaltene, mit einem Block aus Äthylenoxid versehene Alkoxylierungsprodukt mit einem Diepoxid verknüpft, wobei bei der Verknüpfungsreaktion pro Mol Diepoxid 0,5 bis 3 Mol Alkoxylierungsprodukt eingesetzt werden.

17. Verdickungsmittel nach einem der Ansprüche 1 bis 16, dadurch gekennzeichnet, daß das Verdikkungsmittel Gemische von Alkylenglykolalkyläther enthält.

18. Verdickungsmittel nach einem der Ansprüche 1 bis 17, dadurch gekennzeichnet, daß das Verdikkungsmittel Gemische von Polyätherderivaten enthält.

19. Verwendung der Verdickungsmittel nach einem der Ansprüche 1 bis 18 zur Verdickung von wäßrigen Systemen.

20. Verwendung nach Anspruch 19 zum Verdicken von wäßrigen hydraulischen Flüssigkeiten.

21. Verwendung nach Anspruch 19 zur Verdickung von wäßrigen Systemen für die Metallbearbeitung.

22. Verdickungsmittel nach einem der Ansprüche 10 bis 13, dadurch gekennzeichnet, daß $n = 50$ bis 70, $m = 0$ und $p = 1$ ist.